# EUROPEAN PATENT SPECIFICATION

(11) **EP 0 569 588 B1**
(45) Date of publication and mention of the grant of the patent: **06.12.1995**
(21) Application number: 92910159.0
(22) Date of filing: 19.05.1992
(51) Int. Cl.: H02P 7/00

(54) **DEVICE FOR CONTROLLING CURRENT APPLICATION TO INDUCTANCE COIL**
VORRICHTUNG ZUR STROMREGELUNG IN EINER INDUKTANZSPULE
DISPOSITIF DE REGULATION DE L'APPLICATION DE COURANT A UNE BOBINE D'INDUCTANCE

(30) Priority: 21.05.1991 JP 214840/91
(43) Date of publication of application: 18.11.1993
(73) Proprietor: KABUSHIKIGAISHA SEKOGIKEN, Shibuya-ku, Tokyo 150 (JP)
(72) Inventor: BAHN, Itsuki, Nerima-ku, Tokyo 177 (JP)
(74) Representative: Billington, Lawrence Emlyn
(86) International application number: JP9200641
(87) International publication number: WO9221176

(56) References cited:
- EP-A- 0 443 032
- WO-A-91/03870
- JP-A-53 129 809
- JP-A-57 122 696
- US-A- 4 229 685

## Description

### TECHNICAL FIELD

The present invention relates to a current supply control apparatus, which is capable of accurately executing a current supply control of an inductance coil without causing time lag, for example, in such a case where current supply control with a designated waveform is required for an armature coil in a motor having an output of 30 watts or more while the motor is in high-speed operation.

### BACKGROUND ART

In an electromagnet constituting a magnetic bearing, its exciting coil has a large inductance and therefore it may become difficult to cause a change in an exciting current being supplied speedy enough to realize a floating of rotor.

In the case where a chopper circuit is provided to control an exciting current supplied to an inductance coil, when the inductance coil has a large inductance, the responsiveness of a chopper circuit is usually improved by simply and correspondingly increasing the power source voltage for the rapid buildup of the exciting current, whereby the magnetic energy stored in the inductance coil can be returned to the power source for the rapid builddown of the exciting current, thereby obtaining the quicker response in current supply control.

As is explained in the foregoing, a method for improving a response in an exciting current supplied through a chopper circuit to a large inductance coil is to increase a voltage of an electric power source. Increasing the voltage of electric power source further for more quicker response, however, will cause the power source voltage to become too high for practical use.

For example, in the case of an induction motor or a reluctance type motor of 500-watt output, in order to reduce a pulse width used in a chopper control of an armature current down to an order of approximately several micro seconds, the voltage of electric power source needs to be increased up to 5-10 times an applied voltage for obtaining a driving torque, and this will give rise to a problem of impracticability.

Above-described problems also applies in the same way as drawbacks in controlling an exciting coil of an electromagnet in a magnetic bearing. Another method is disclosed in WO-A-9103870.

Thus, an object of the present invention is to provide an apparatus capable of accurately carrying out a current supply control for an inductance coil without causing time lag.

### DISCLOSURE OF INVENTION

The present invention provides a current supply control apparatus for an inductance coil comprising:
a serial joint component including an inductance coil wound around a magnetic core and a first semiconductor switching element; a DC electric power source whose positive terminal is connected to said inductance coil of said serial joint component and whose negative terminal is connected to said first semiconductor switching element; a first diode inversely connected to said serial joint component; a second diode whose input terminal is connected to a junction point between said first semiconductor switching element and said inductance coil; a third diode interposed between said positive terminal of the DC electric power source and said inductance coil in a forward direction; a current detecting circuit for detecting a current value flowing in said inductance coil to generate a detecting signal; a means for supplying a standard voltage having a predetermined waveform; a small-capacitance capacitor with one end connected to either the positive terminal or negative terminal of the DC electric power source and the other end connected to an output terminal of said second diode so that magnetic energy stored in the inductance coil is discharged through said first and second diode to charge the small-capacitance capacitor when said first semiconductor switching element is turned off; and
a chopper circuit which functions to turn off said first semiconductor switching element when the signal voltage detected in said current detecting circuit exceeds said standard voltage so that an exciting current supplied to said inductance coil is sharply decreased by causing the magnetic energy stored in the inductance coil to discharge through said second diode to charge the small-capacitance capacitor to a high voltage, the chopper circuit further functions to turn on said first semiconductor switching element when the signal voltage detected in said current detecting circuit decreases down to a predetermined value so that an exciting current supplied to said inductance coil is sharply increased by applying the high voltage charged in the small-capacitance capacitor through a second semiconductor switching element to a junction between an output terminal of said third diode and said inductance coil, and means to synchronize turning-on times of said first and second semiconductor switching elements.

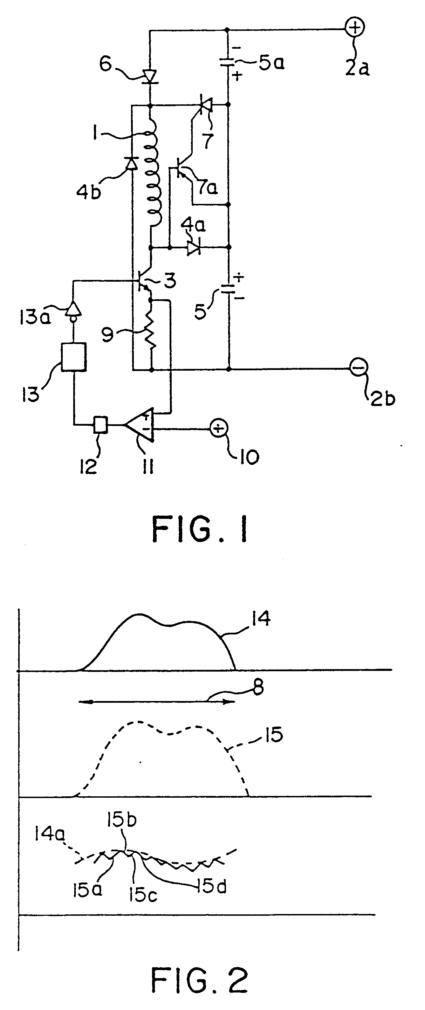

The operation of the present invention will be explained with reference to Fig. 1. When a transistor 3 is turned off, magnetic energy stored in an inductance coil 1 is discharged through diodes 4a and 4b into a capacitor 5 to charge it with polarities shown in the drawing.

By selecting the capacitance of capacitor 5 corresponding to the inductance of inductance coil 1, the capacitor 5 can be charged up to a limitation defined by a withstanding voltage of each component (generally speaking, up to approximately 600 volts). Thus, the exciting current decreases sharply. In this case, SCR 7 is maintained in a turning-off condition.

When the exciting current decreases by a predetermined amount, the transistor 3 is turned on. In this instance, as the SCR 7 is simultaneously turned on, the exciting current builds up sharply by virtue of the voltage charged in the capacitor 5.

The chopper circuit is designed to repeat the above-described cycle, so that it is capable of accurately carrying out the current supply control for the inductance coil 1 in accordance with the standard voltage without time lag. Thus, above-described problems can be solved.

As is explained in the foregoing, a large inductance load usually requires a long time to store or discharge magnetic energy. Hence, a measure for improving response in the current supply control is required. To meet this requirement, a conventional method proposes to use a chopper circuit for increasing applied voltage of electric power source. However, such a method has not been put to practical use because of its limited responsiveness in actual current supply control.

However, in accordance with the measure embodying the present invention, it becomes possible to execute a current supply control for an inductance coil with good response without increasing an applied voltage.

Especially, it is quite useful to apply this technical teaching of the present invention to a servo-control of a large motor with a large inductance or a current supply control for exciting coils of electromagnet constituting a magnetic bearing that requires quick response in the control.

According to a conventional measure, a pair of semiconductor switching elements are connected to both ends of the inductance coil 1. However, the apparatus embodying the present invention requires only one semiconductor switching element disposed on the side of the negative terminal of the electric power source. Thus, the circuit can be simplified and manufactured at low cost. Since the SCR 7 is used for only a short period of time, its capacity can be of relatively small value, not causing any significant problems.

### BRIEF DESCRIPTION OF DRAWINGS

Fig. 1 is an electric circuit diagram showing an apparatus in accordance with an embodiment of the present invention; and
Fig. 2 is a time chart showing electric signals obtained in various components in the circuit of Fig. 1.

### BEST MODE FOR CARRYING OUT THE INVENTION

Referring to Fig. 1, an inductance coil 1 is, for example, an exciting coil for exciting a magnetic core constituting a magnetic bearing. The magnetic core is not shown in the drawing. The transistor 3 is connected to a lower end of the inductance coil 1, and the diode 4b is inversely connected to a serial joint component consisting of the inductance coil 1 and the transistor 3. An exciting current of the inductance coil 1 is detected as a voltage drop in the resister 9, and its output is supplied to a positive terminal of the operational amplifier 11. A negative terminal of the operational amplifier 11 is connected to a terminal 10 that provides the standard voltage.

An example of the standard voltage is shown as a curve 14 in a time chart of Fig. 2. Terminals 2a and 2b of the DC electric power source provide current to the inductance coil 1 through a diode 6 which is interposed in a forward direction.

When the standard voltage shown by the curve 14 of Fig. 2 is supplied to the operational amplifier 11, an output of the operational amplifier 11 becomes a LOW-level. In this case, an output of a monostable circuit 13 becomes a LOW-level, so that output from an inversion circuit 13a becomes a HIGH-level. This causes the transistor 3 to be turned on, and an exciting current increases.

When the voltage inputted to the positive terminal of the operational amplifier 11 exceeds the standard voltage of the negative terminal in response to the increase of the exciting current, the output of the operational amplifier 11 is turned to a HIGH-level. This HIGH-level signal is supplied to a differential circuit 12. As a differential pulse of a buildup portion is inputted to the monostable circuit 13, an output from the monostable circuit 13 has a predetermined width. Thus obtained electric pulse is changed into a LOW-level signal through the inversion circuit 13a, and, therefore, the transistor 3 is turned off during a predetermined period of time in response to this LOW-level pulse signal.

Consequently, magnetic energy stored in the inductance coil 1 is discharged through the diodes 4a and 4b into the capacitor 5. Since the capacitor 5 has a small capacitance, its charging voltage increases so rapidly that the exciting current decreases steeply. When the exciting current decreases down to a predetermined value, an output of the monostable circuit 13 returns to a LOW-level, so that the transistor 3 is turned on to increase the exciting current.

The exciting current is detected as a voltage drop in the resister, 9 and its output is supplied to a positive terminal of the operational amplifier 11. A negative terminal of the operational amplifier 11 is supplied with the standard voltage from the terminal 10.

An example of the standard voltage is shown as the curve 14 in the time chart of Fig. 2. Terminals 2a and 2b of the DC electric power source provide current to the inductance coil 1 through the diode 6 which is interposed in a forward direction.

When the standard voltage shown by the curve 14 of Fig. 2 is supplied to the operational amplifier 11, an output of the operational amplifier 11 becomes a LOW-level.

In this case, as the transistor 7a is turned on in response to turning-on operation of the transistor 3, a gate current of the SCR 7 (silicon controlled rectifier) is obtained by the charged voltage of the capacitor 5 to turn on the SCR 7. Hence, the high voltage of capacitor 5 is applied and the exciting current builds up sharply. Upon a termination of discharge in the capacitor 5, the SCR 7 is automatically turned off.

When the exciting current increases to turn off the transistor 3 again, the transistor 3 is turned off during a period of time corresponding to the output signal width fed from the monostable circuit 13.

As the chopper circuit functions in such a manner, it is characteristic that the circuit is capable of providing in proportion to the curve 14 of Fig. 2.

An arrow 8 in Fig. 2 shows a width of curve 14, and a dotted line 15 shows an exciting current curve. Current curves 15a and 15c show buildup portions of the exciting current, and curves 15b, 15d,---show trailing-off portions of the exciting current.

A dotted curve 14a corresponds to a part of the curve 14, which is enlarged on a time scale.

A curve 15 is a curve obtained by smoothing the curves 15a, 15b,---.

When the inductance value of the inductance coil 1 is constant, a time widths of curves 15b, 15d,---are regulated by an output pulse width of monostable circuit 13, while a time widths of curves 15a, 15c,---are varied in accordance with the capacitance of capacitor 5, and such time width tends to decrease as the capacitance decreases.

Occurrence of the above-described phenomenon can be anticipated from the fact that a response frequency increases as the capacitance of capacitor 5 decreases, since the inductance coil 1 and the capacitor 5 have characteristics similar to a serial oscillation circuit.

Joule loss and iron loss occurring due to the resistance of inductance coil 1 are compensated at the end of the buildup portion of the supplied current fed from the DC electric power source.

In the case of a well-known apparatus, the DC electric power source voltage is increased to speed up a storage of magnetic energy, whereby the buildup of current can be speeded, and further the stored magnetic energy is returned to the electric power source to make steep the trailing-off of the current.

Accordingly, an applied voltage becomes so high that the reduction of chopper frequency (i.e. the time width of curves 15a, 15b,---) will be limited.

For example, if the width of arrow 8 corresponding to the standard voltage curve 14 is decreased down to as low as approximately 100 »sec, it becomes impossible to obtain a quick response with a small time constant corresponding to the unevenness of curve 14, a disadvantage to be confronted with in such a case.

However, an apparatus embodying the present invention is advantageous in that the response can be made faster by reducing the capacitance of capacitor 5, even when the applied voltage is low.

According to an actual measurement, in the case where a current supply control for exciting coils of the magnetic poles in a reluctance type motor of approximately 300-watt output, the width of curves 15a, 15b,---becomes 0.5 »sec when DC 100V is applied. In this case, the capacitance of capacitor 5 is 0.1 »F.

Therefore, even in the case of a large inductance load, it becomes possible to execute a current supply control with good response in a change of exciting current. Thus, magnetic floating of rotor with higher accuracy can be accomplished through the current supply control for exciting coils of an electromagnet in a magnetic bearing.

An output pulse width fed from the monostable circuit 13 and the capacitance of capacitor 5 need to be adjusted in accordance with an inductance value of the inductance coil 1.

Furthermore, if a high-speed switching element such as an IGBT is substituted for the transistor 3, above-described responsiveness can be improved further.

If the waveform of curve 14, shown in Fig. 1, is changed to a sine wave, the apparatus embodying the present invention can be applied to an invertor. Thus, it becomes possible to obtain a high-speed induction motor with less vibration.

Referring to Fig. 1, even when the capacitor 5 is disposed adjacent to the positive terminal 2a of the electric power source instead of adjacent to the negative terminal 2b in the embodiment of the present invention, the same function and effect can be obtained.

## Claims

1. A current supply control apparatus for an inductance coil comprising:
a serial joint component including an inductance coil (1) wound around a magnetic core and a first semiconductor switching element (3);
a DC electric power source whose positive terminal (2a) is connected to said inductance coil of said serial joint component and whose negative terminal (2b) is connected to said first semiconductor switching element;
a first diode (4b) inversely connected to said serial joint component;
a second diode (4a) whose input terminal is connected to a junction point between said first semiconductor switching element and said inductance coil;
a third diode (6) interposed between said positive terminal of the DC electric power source and said inductance coil in a forward direction;
a current detecting circuit (9) for detecting a current value flowing in said inductance coil to generate a detecting signal;
a means (10) for supplying a standard voltage having a predetermined waveform;
a small-capacitance capacitor (5, 5a) with one end connected to either the positive terminal or negative terminal of the DC electric power source and the other end connected to an output terminal of said second diode so that magnetic energy stored in the inductance coil is discharged through said first and second diode to charge the small-capacitance capacitor when said first semiconductor switching element is turned off; and
a chopper circuit (11, 12, 13, 13a) which functions to turn off said first semiconductor switching element when the signal voltage detected in said current detecting circuit exceeds said standard voltage so that an exciting current supplied to said inductance coil is sharply decreased by causing the magnetic energy stored in the inductance coil to discharge through said second diode to charge the small-capacitance capacitor to a high voltage, said chopper circuit further functions to turn on said first semiconductor switching element when signal voltage detected in said current detecting circuit decreases down to a predetermined value so that an exciting current supplied to said inductance coil is sharply increased by applying the high voltage charged in the small-capacitance capacitor through a second semiconductor switching element (7) to a junction between an output terminal of said third diode and said inductance coil, and
means (7a) to synchronize turning-on times of said first and second semiconductor switching elements.

## Patentansprüche

1. Stromversorgungssteuergerät für eine Induktionsspule mit:
einer in Serie verbundenen Komponente, die eine Induktionsspule (1), die um einen Magnetkern gewickelt ist und ein erstes Halbleiter-Schaltelement (3) aufweist,
einer elektrischen Gleichspannungsquelle, deren positiver Anschluß (2a), mit welcher der Induktionsspule der seriell verbundenen Komponente verbunden ist, und dessen negativer Anschluß (2b) mit dem ersten Halbleiter-Schaltelement verbunden ist,
einer ersten Diode (4b) die zu der seriell verbundenen Komponente umgekehrt gerichtet verbunden ist,
einer zweiten Diode (4a), deren Eingangsanschluß mit einem Knotenpunkt zwischen dem ersten Halbleiter-Schaltelement und der Induktionsspule verbunden ist,
einer dritten Diode (6), die zwischen dem positiven Anschluß der elektrischen Gleichspannungsquelle und der Induktionsspule in Vorwärtsrichtung zwischengesetzt ist,
einer Stromerfassungsschaltung (9), um einen Stromwert, der in der Induktionsspule fließt, zu erfassen, um ein Erfassungssignal zu erzeugen,
einer Vorrichtung (10), um eine Standardspannung, die eine vorbestimmte Kurvenform aufweist, zuzuführen,
ein Kleinkapazitätskondensator (5, 5a), der mit einem Ende entweder mit dem positiven Anschluß oder dem negativen Anschluß der elektrischen Gleichspannungsquelle verbunden ist, und dessen anderes Ende mit einem Ausgangsanschluß der zweiten Diode verbunden ist, so daß die in der Induktionsspule gespeicherte magnetische Energie über die erste und zweite Diode entladen wird, um den Kleinkapazitätskondensator zu laden, wenn das erste Halbleiter-Schaltelement ausgeschaltet ist, und
einer Chopperschaltung (11, 12, 13, 13a), die zum Ausschalten des ersten Halbleiter-Schaltelementes arbeitet, wenn die in der Stromerfassungsschaltung erfaßte Signalspannung die Standardspannung übersteigt, so daß ein Erregerstrom, der der Induktionsspule zugeführt ist, durch Verursachen der magnetischen Energie, die in der Induktionsspule gespeichert ist, um über die zweite Diode zu entladen, um den Kleinkapazitätskondensator auf eine hohe Spannung aufzuladen, stark vermindert ist, wobei die Chopperschaltung weiterhin arbeitet, um das erste Halbleiter-Schaltelement einzuschalten, wenn die in der Stromerfassungsschaltung erfaßte Signalspannung auf einen vorbestimmten Wert absinkt, so daß ein der Induktionsspule zugeführter Erregerstrom, durch Anwendung der Hochspannung, die in dem Kleinkapazitätskondensator gespeichert ist, über das zweite Halbleiter-Schaltelement (7) zu einem Knotenpunkt zwischen einem Ausgangsanschluß der dritten Diode und der Induktionsspule, stark erhöht ist, und
einer Vorrichtung (7a) um die Einschaltzeiten des ersten und zweiten Halbleiter-Schaltelementes zu synchronisieren.

## Revendications

1. Un dispositif de régulation de l'application de courant à une bobine d'inductance comprenant :
un composant à liaison série comprenant une bobine d'inductance (1) enroulée autour d'un noyau magnétique et un premier élément de commutation à semi-conducteur (3) ;
une source d'énergie électrique à courant continu dont la borne positive (2a) est reliée à ladite bobine d'inductance dudit composant à liaison série et dont la borne négative (2b) est reliée audit premier élément de commutation à semi-conducteur ;
une première diode (4b) reliée en inverse audit composant à liaison série ;
une seconde diode (4a) dont la borne d'entrée est reliée à un point de jonction entre ledit premier élément de commutation à semi-conducteur et ladite bobine d'inductance ;
une troisième diode (6) interposée dans le sens direct entre ladite borne positive de la source d'énergie électrique à courant continu et ladite bobine d'inductance ;
un circuit de détection de courant (9) pour détecter l'intensité d'un courant circulant dans ladite bobine d'inductance afin de produire un signal de détection ;
un moyen (10) pour fournir une tension standard présentant une forme d'onde prédéterminée ;
un condensateur de faible capacitance (5, 5a) avec une première extrémité reliée soit à la borne positive soit à la borne négative de la source d'énergie électrique à courant continu et l'autre extrémité reliée à une borne de sortie de ladite seconde diode de sorte que l'énergie magnétique stockée dans la bobine d'inductance est déchargée à travers lesdites première et seconde diodes afin de charger le condensateur de faible capacitance lorsque ledit premier élément de commutation à semi-conducteur est mis à l'état non passant ; et
un circuit hacheur (11, 12, 13, 13a) qui agit pour mettre à l'état non passant ledit premier élément de commutation à semi-conducteur lorsque la tension du signal détectée dans ledit circuit de détection de courant dépasse ladite tension standard de sorte qu'un courant d'excitation appliqué à ladite bobine d'inductance est brusquement diminué en amenant l'énergie magnétique stockée dans la bobine d'inductance à se décharger à travers ladite seconde diode afin de charger le condensateur de faible capacitance à une tension élevée, ledit circuit hacheur agit en outre pour mettre à l'état passant ledit premier élément de commutation à semi-conducteur lorsque la tension du signal détectée dans ledit circuit de détection de courant diminue jusqu'à une valeur prédéterminée de sorte qu'un courant d'excitation appliqué à ladite bobine d'inductance est brusquement augmenté en appliquant la haute tension chargée dans le condensateur de faible capacitance à travers un second élément de commutation à semi-conducteur (7) à une jonction entre une borne de sortie de ladite troisième diode et ladite bobine d'inductance, et des moyens (7a) pour synchroniser les temps de mise à l'état passant desdits premier et second éléments de commutation à semi-conducteur.
